# EUROPEAN PATENT APPLICATION

(11) **EP 4 755 495 A1**
(43) Date of publication of application: **10.06.2026**
(21) Application number: 25219149.9
(22) Date of filing: 27.11.2025
(51) Int. Cl.: B01D 53/56, B01D 53/047, B01D 53/86

(54) **A METHOD FOR THE REMOVAL OF NITROGEN COMPONENTS FROM A GAS STREAM**

(30) Priority: 27.11.2024 NL 2039175
(71) Applicant: NOx-E B.V., 1521 HR Wormerveer (NL)
(72) Inventor: SPRENGERS, Joost Cornelis, 1521 HR Wormerveer (NL); BAKKER, Harm, 1521 HR Wormerveer (NL); HOOIJSCHUUR, Jan-Hein, 1521 HR Wormerveer (NL); PLUGGE, Rene Peter, 1521 HR Wormerveer (NL); HULSKER, Joeri Arno, 1521 HR Wormerveer (NL); YSKES, Damiën Maurice, 1521 HR Wormerveer (NL)
(74) Representative: Algemeen Octrooi- en Merkenbureau B.V.

(57) **Abstract**

The present invention concerns a method for the removal of nitrogen components from a gas stream and a device. One object of the present invention is to provide a method which can be used to remove nitrogen components from a gas stream. Another object of the present invention is to provide a device with which the nitrogen components removed from a gas stream can be converted into non-harmful compounds.

## Description

The present invention relates to a method for the removal of nitrogen components from a gas stream and a device for such a method.

Around 1960, a significant decline in the fish stocks of certain lakes was observed in Norway and Sweden. Due to acidification of the water, fewer and fewer fish came, which situation was attributed to 'acid rain'. The chemicals responsible for acid rain mainly include sulphur dioxide (SO₂), nitrogen oxides (NOₓ) and ammonia (NH₃). The amount of acid rain has decreased in recent decades as a result of a number of measures, including desulphurisation plants, industrial flue gas cleaning and the introduction of the three-way catalytic converter into vehicles.

Natura 2000 is a European network of protected nature reserves in which the natural habitat of plants and animals is protected in order to maintain biodiversity. The laws and regulations currently in force prescribe that the emission of harmful components must be reduced.

The removal of harmful components from a gas stream is well known in the art. U.S. Publication No. US20110056187A1 relates to a process for treating diesel engine exhaust containing NOx and hydrocarbons (HCs), comprising the addition of NH₃ to the exhaust gas stream containing NOx and HCs, and the selective reaction of NOx with the NH₃ added to the exhaust gas stream over a selective catalytic reduction catalyst (SCR) which includes a zeolite exchanged with copper (Cu) and/or iron (Fe), wherein the molecular sieve-like action of the zeolite keeps the hydrocarbons present in the exhaust gas away from the active sites in the catalyst where the reactions take place.

European patent application EP 2382031 relates to an emission treatment system for treating an exhaust gas stream from an engine containing an initial NOx concentration and particulates, wherein the system includes: a particulate filter that includes a first SCR catalyst that is effective for NOx conversion, a flow-through substrate loaded with a second SCR catalyst that is effective for NOx conversion.

German Offenlegungsschrift DE10127768 relates to a method for the manufacture of carbon molecular sieves for the removal of nitrogen from air, wherein a pre-product is weakly activated with steam at temperatures of 800-900°C and the weakly activated product is treated at 750-850°C with carbon-releasing hydrocarbons, wherein a commercially available carbon molecular sieve made from coconut shells is activated with steam at temperatures of 800°C and then treated with carbon-releasing hydrocarbons at the same temperature.

US Publication No. US2012302432 relates to a method for the manufacture of an exhaust gas after-treatment apparatus in an exhaust gas line of a diesel internal combustion engine, wherein the method involves producing a NOx storage catalyst by extrusion and coating a substrate, wherein the NOx storage catalyst has at least one storage component for storing nitrogen oxides during operating phases and at least an active component for reducing stored nitrogen oxides during other phases of operation; and applying a molecular sieve layer to the NOx storage catalyst, wherein the molecular sieve layer is configured in such a way as to prevent SO2 from reaching the NOx storage catalyst.

US Publication No. US2006286012 relates to an apparatus for catalytically treating a gas stream to reduce the presence of NOx in it, wherein the apparatus includes a first catalyst with a first optimal processing temperature range for catalytic processing of the gas flow, and a second catalyst located downstream of the first catalyst, wherein the second catalyst has a second lower optimal processing temperature range compared to the first temperature range for catalytic processing of the gas flow after the first catalyst.

Japanese patent application JP 2002 126451 relates to a device for removing nitrogen oxides from the atmosphere wherein an air stream flows through a narrow gap between a pair of parallel plates, and as the air flows through the parallel plates, nitrogen oxides diffuse into the air to the inner wall surfaces of the parallel plates and are adsorbed and removed by the inner wall surfaces coated with titanium dioxide ultrafine particles photocatalyst and hydroxyapatite fine particles adsorbents.

Chinese patent application CN 204 824 173 relates to a system for the production of nitric acid from nitrogen oxides in flue gas, consisting of an adsorption bed, a thermal desorption system, an oxidation system and an absorption system, wherein the oxidation system consists of an oxidation reactor and an ozone generator connected in series via pipelines. The adsorption bed consists of two or more sets connected in parallel, wherein the adsorption bed is filled with hetero polyacid adsorbent, wherein the inlet of each adsorption bed is connected to the desorption system and the flue gas input pipe through a three-way valve, and the outlet is connected to the flue gas emission port and the inlet of the oxidation reactor through a three-way valve, wherein the outlet of the oxidation reactor is connected to the intake of the absorption system through a pipeline. The NO-containing gas generated during the absorption process is transported to the flue gas input pipe via a pipeline.

Chinese patent application CN 118 286 819 relates to a microwave ultraviolet treatment process and system for the formation of ozone for the adsorption and concentration of flue gas containing SO₂ and NO₂, wherein the treatment process includes the steps of heat recovery from high-temperature flue gas, zeolite rotor adsorption, ammonia dosing and treatment system, microwave ultraviolet treatment, particulate matter capture and flue gas emissions.

US Publication No. 2021/252449 relates to a method for the utilization of nitrogen oxides contained in the ambient air, comprising the adsorption of nitrogen oxides from the ambient air in a stationary adsorbent unit which contains an adsorbent material, removing the adsorbent material loaded with nitrogen oxides from the adsorbent unit, collecting and temporarily storing the adsorbent material loaded with nitrogen oxides at a collecting site, transferring the adsorbent material loaded with nitrogen oxides to a desorption module, desorption of adsorbed nitrogen oxides from the adsorbent material and conversion of the nitrogen oxides into liquid or solid nitrogenous compounds.

US 6 506 351 relates to a method for the removal of nitrogen oxides from a gas stream, comprising: feeding the gas stream to a nitrogen oxide adsorber, wherein the nitrogen oxides are adsorbed in the adsorber and feeding a gas stream containing ozone and oxygen to the adsorber, wherein the ozone reacts with the nitrogen oxides to form N₂0s, wherein the oxygen and ozone-containing stream is heated to a temperature of 50-150°C before being sent to the adsorption device.

Chinese patent application CN 118 892 736 relates to a method for the capture and purification of nitrogen oxide residual gas in a post-treatment plant, wherein the following steps are applied: exhaust gas pre-treatment, comprising rapid cooling, washing and freezing to remove radioactive particles and water-soluble radionuclides from the residual gas and water removal by means of freezing, which results in a first residual gas and the drying of the first residual gas to obtain a second residual gas. The second residual gas is adsorbed by an adsorbent, which adsorbs nitrogen oxides and oxidizes NO in the nitrogen oxides to NO₂, resulting in a third residual gas.

An object of the present invention is to provide a method which can be used to remove nitrogen components from a gas stream.

Another object of the present invention is to provide a device with which the nitrogen components removed from a gas stream can be converted into non-harmful compounds.

Another object of the present invention is to provide a method which can remove nitrogen components from a gas stream, which method can be operated continuously and wherein a cleaned gas stream is obtained with a nitrogen content of which is below at least 10 ppm, preferably below at least 1 ppm.

The present invention as mentioned in the preamble thus relates to a method for the removal of nitrogen components from a gas stream, which method comprises the following steps:
- Providing a gas stream comprising nitrogen components,
- Pressurizing the aforementioned gas flow,
- Bringing the aforementioned pressurized gas stream into contact with an adsorbent to form a gas stream depleted from nitrogen components,
- Reducing the pressure of the adsorbent to obtain a gas stream rich in nitrogen components,
- Converting the nitrogen components into nitrate.

On basis of the above-mentioned steps, the present inventors have established that one or more of the aforementioned objects are fulfilled. According to the present method the undesirable nitrogen components from the gas stream are adsorbed into the adsorbent. Such an adsorption step is performed under increased pressure. In order to recover the nitrogen components thus adsorbed, a so-called desorption step is carried out, wherein the nitrogen components are released from the adsorbent and collected. Such a desorption step is performed at a pressure that is lower than the pressure applied in the adsorption step. The nitrogen components thus captured are then treated in such a way that the nitrogen components are converted into nitrate.

According to an example, the step of converting the nitrogen components into nitrate involves a step wherein the gas stream rich in nitrogen components is treated with UV light. Such irradiation with UV light has the effect of converting the nitrogen components into nitrate, HNO₃ and NO₂, among others.

According to an example, irradiation with UV light is carried out in the presence of titanium dioxide (TiO₂). The presence of TiO₂ should be seen as a catalyst for the conversion NO₃ to nitrate, allowing a more complete and rapid conversion to take place.

According to an example, after the step of irradiation with UV light, a step of washing is carried out, wherein the gas stream obtained after the step of irradiation with UV light is passed through a scrubber in order to obtain an almost complete removal of nitrogen components, in particular HNO₃ and NO₂, from the gas stream. Such a scrubber is operated with a leaching solution, for example caustic soda, after which NaNO₃ is obtained.

According to an example, the gas stream, which comprises nitrogen components, is first pressurized and then the gas stream thus pressurized is brought into contact with the adsorbent. According to such a step, a rapid adsorption of the nitrogen components takes place at the adsorbent.

According to an example, after being brought into contact with the gas stream comprising nitrogen components, the adsorbent is brought under reduced pressure in order to release the adsorbed nitrogen components. Such a desorption step results in the formation of a gas stream that is rich in nitrogen components. After the desorption step, the adsorbent is suitable for use in a subsequent cycle for the adsorption of new nitrogen components. **In** the present method there are thus successive adsorption phases and desorption phases.

According to an example, the step of pressurizing the gas stream, which comprises nitrogen components, namely the adsorption step, is carried out at a pressure of at least 6 bar (0.6 MPa).

According to an example, the step of reducing the pressure of the adsorbent to obtain a gas stream rich in nitrogen components is carried out at a pressure lower than the pressure applied in the adsorption step, for example a pressure not exceeding 6 bar (0,6 MPa), in particular in a range of 6 bar-3, 5 bar (0.6 Mpa - 0.35 MPa).

According to an example, the gas stream to be treated, which comprises nitrogen components, is brought under increased pressure before contact with the adsorbent takes place. According to an example, the gas stream thus pressurized is dehydrated and the moisture obtained in the process is returned to the system, in particular to the gas stream obtained after the desorption step, which is to say, the gas stream rich in nitrogen components. The present inventors have found that the extraction of moisture prevents condensation when pressure drops suddenly occur. After all, by reducing pressure, heat is extracted from the environment.

The gas stream rich in nitrogen components is then subjected to a UV light treatment. The present inventors have found that oxidative treatment with UV light should preferably be carried out under humid conditions in order to achieve a desirable conversion of the nitrogen components. It has been particularly beneficial to carry out the next step of the scrubber if the oxidative treatment has mainly led to the formation of NO₂ and HNO₃ wherein the formation of NO has been reduced to a minimum. The inventors present have found that the chemical reaction with the caustic solution in the scrubber, in which further conversion to nitrate takes place, is more favourable for NO₂ and HNO₃ than for NO.

According to an example, the nitrogen-rich gas stream, obtained after the aforementioned desorption stage, is stored in a storage unit before the conversion of the nitrogen components into nitrate is carried out.

According to an example, the adsorbent to be used in the present method is chosen from the group of carbon molecular sieve, zeolite and activated carbon, or a combination of these. Such materials have proven to be suitable for use in a cycle of successive adsorption phases and desorption phases wherein the performance of such materials is maintained.

According to an example, the steps of adsorbing nitrogen components by adsorbent and desorbing nitrogen components from adsorbent are performed alternately such that nitrogen components are continuously removed from a gas stream comprising nitrogen components.

According to an example, the gas stream, which comprises nitrogen components, originates from the exhaust gases of an internal combustion engine. The present method is suitable for use not only in diesel generators, but also in tunnel exhaust ducts where there is a lot of car traffic, especially in the built environment. Other applications include, for example, construction sites and also offshore. According to the present method it has been possible to convert exhaust gases with an input of 1600 ppm nitrogen components into clean waste gas with a quantity of nitrogen components below at least 10 ppm.

The present invention also refers to a device for the removal of nitrogen components from a gas stream, comprising a device for the supply of a gas stream comprising nitrogen components, a device comprising an adsorbent for forming a gas stream depleted of nitrogen components, means for obtaining a gas stream rich in nitrogen components and means for converting nitrogen components into nitrate.

According to an example, the device also comprises one or more compressors for pressurizing the gas flow that comprises nitrogen components. Thus, the adsorption phase is carried out under favourable conditions.

According to an example, the device also comprises means of releasing pressure in order to allow the desorption phase to take place, in which phase the adsorbed nitrogen components are released from the adsorbent.

According to an example, the means of converting the nitrogen components into nitrate are chosen from the group of a UV light source and a scrubber, or a combination thereof, wherein the UV light source is preferably equipped with a catalyst material, in particular TiO₂.

According to an example, the device for the removal of nitrogen components from a gas stream also comprises a storage unit for the gas stream rich in nitrogen components.

According to an example, the device also comprises means for the extraction of moisture from the gas stream to be treated, which comprises nitrogen components, and means for supplying extracted moisture to the gas stream rich in nitrogen components. Such a supply can take place, for example, by returning the extracted moisture to the storage unit for the gas stream rich in nitrogen components. For example, the extraction of moisture is extracted by the compressor itself by a pressure drop in the compressor and via a water separator wherein a dry gas flow is created.

The present invention will now be explained in more detail below on the basis of two drawings, wherein the description of the drawings is only intended to clarify the invention.
Figure 1 shows a process diagram for the removal of nitrogen components from a gas stream.
Figure 2 shows another embodiment of a process diagram for the removal of nitrogen components from a gas stream.

**In** the attached figure, a process diagram 1 for the removal of nitrogen components from a gas stream is shown schematically. Inlet 2 for the gas flow to be cleaned is passed through a pre-filter 3. Inlet 2 can be directly linked to the exhaust of an internal combustion engine, for example a diesel generator. The gas flow obtained in this way is pressurized by means of a compressor 4, wherein the pressure is measured with meter 5. Buffer tank 6 serves as a storage tank for the gas flow to be cleaned. Via a valve system 7, 8, 9, 10 and 11, the gas flow to be cleaned is led to vessels 12, 13 in which adsorbent is located. In vessels 12 and 13, adsorption and desorption take place in succession. In the adsorption phase, for example, vessel 12 is flowed through with the gas stream in which the nitrogen components are present wherein the nitrogen components will attach (adsorb) to the adsorbent. The gas stream thus depleted of nitrogen components is discharged into the atmosphere, indicated by reference number 30, by means of valve systems 14, 15 and 16 and buffer vessel 18, equipped with pressure gauge 19. Oxygen goes along with the NOx flow wherein the NOx rich flow enters vessel 26 and the residual flow of oxygen goes through valve 21 to the exit. After some time, saturation of the adsorbent present in vessel 12 occurs and the adsorbed nitrogen components of the adsorbent present in vessel 12 must be released. To this end, the discharge from vessel 12 to the atmosphere via valve systems 14, 15 and 16 is blocked and vessel 12 is depressurised, after which the nitrogen components will detach from the adsorbent and be discharged via valve systems 21, 22 and 24 to buffer vessel 26 for NOx. At lower pressure, the remaining gas will be discharged via valve system 21, wherein needle valve 22 determines how fast this will go. **In** order to be able to carry out a continuous processing, the gas flow from buffer vessel 6, which contains nitrogen components, is diverted to vessel 13 when desorbing vessel 12.

**In** vessel 13, the nitrogen components will adsorb to the adsorbent, and the gas flow thus depleted of nitrogen components will be discharged to the atmosphere 30 via valve system 14, 15 and 16 and buffer vessel 18, equipped with pressure gauge 19. After some time, saturation of the adsorbent occurs in vessel 13 and the adsorbed nitrogen components of the adsorbent must be released. To this end, the discharge from vessel 13 to the atmosphere is blocked via valve systems 14, 15 and 16 and vessel 13 is depressurised, after which the nitrogen components will detach from the adsorbent and are discharged via valve system 21, 22 and 24 to buffer vessel 26 for NOx. At lower pressure, the remaining gas will be discharged via valve system 21, wherein needle valve 22 determines how fast this will go. By now alternating between vessels 12 and 13 with the gas stream to be depleted of nitrogen components, wherein one vessel is in an adsorption phase and the other vessel is in a desorption phase, it has been possible to continuously deplete the gas flow of nitrogen components. **In** practice, one vessel will be in operation mode and the other vessel will be in regeneration mode in order to be prepared for the adsorption process discussed above.

The nitrogen-rich gas flow, which originates from buffer vessel 26 for NOx, is passed to a device 27 in which irradiation with UV light takes place in order to achieve a conversion of NOx to nitrate, HNO₃ and NO₂. Any remaining nitrogen components are removed from the gas stream in the downstream scrubber 29 and the gas stream, which is now stripped of nitrogen components, is discharged into atmosphere 30. Reference numbers 17, 20, 23, 25 and 28 show non-return valves. Although the process diagram discussed above shows two vessels12, 13 with adsorbent, the number of vessels is not limited to that.

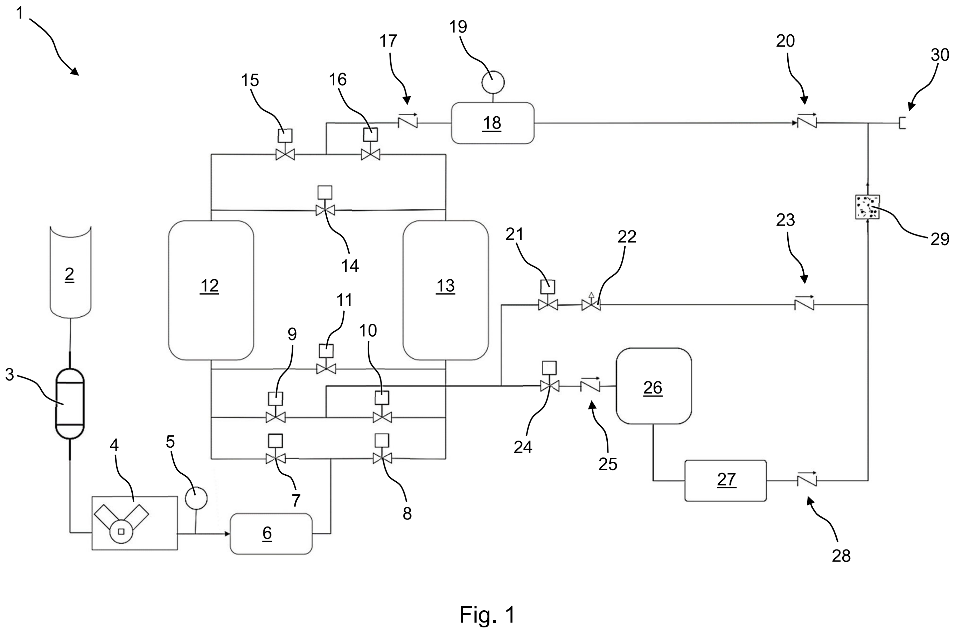

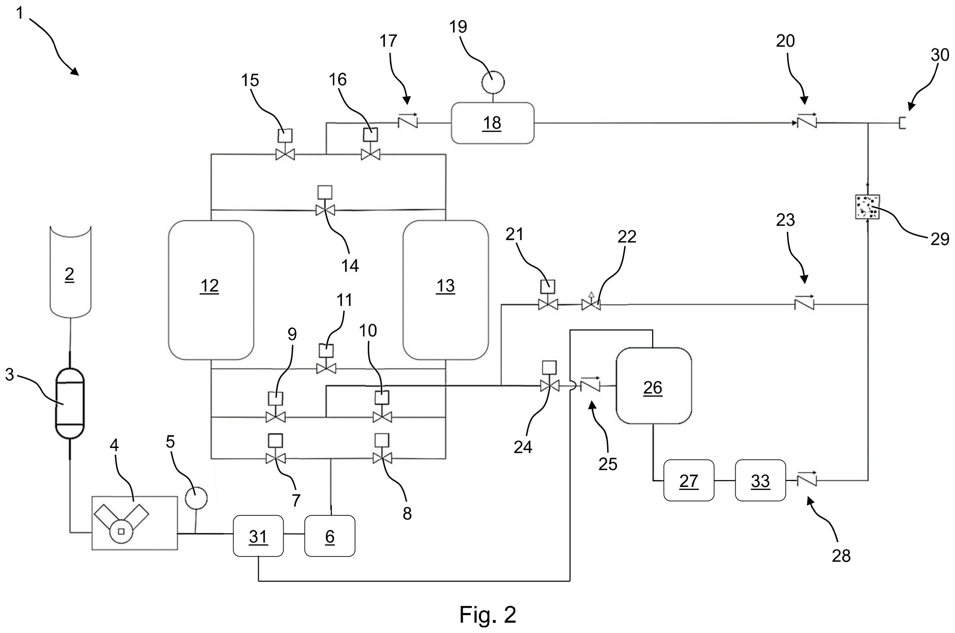

The reference figures used in Figure 2 are identical to those used in Figure 1. Figure 2 differs from Figure 1 in the step of extracting moisture and then returning moisture. The gas flow pressurized in compressor 4 is passed through a water separator 31 and separated into a gas stream to be fed into the adsorbent and a moisture stream 32 to be fed into buffer vessel 26 for NOx. The gas flow exiting from buffer vessel 26 can be seen as a wetted or moisturized gas stream that is led to organ 27 in which a step of irradiation with UV light is carried out. The gas flow treated in this way is directed to scrubber 33. Scrubber 29 can include a series of scrubbers. Although figure 2 also mentions a downstream scrubber 29, it is possible that scrubber 29 is dispensed with in certain embodiments.

## Claims

1. A method for the removal of nitrogen components from a gas stream, which method comprises the following steps:
- Providing a gas stream comprising nitrogen components,
- Pressurizing the aforementioned gas flow,
- Bringing the aforementioned pressurized gas stream into contact with an adsorbent to form a gas stream depleted from nitrogen components,
- Reducing the pressure of the adsorbent to obtain a gas stream rich in nitrogen components,
- Converting the nitrogen components into nitrate.

2. A method according to claim 1, wherein the step of converting the nitrogen components into nitrate comprises a step of irradiating the gas stream rich in nitrogen components with UV light.

3. A method according to claim 2, wherein irradiation with UV light is carried out in the presence of TiO₂.

4. A method according to one or more of claims 2-3, wherein after the step of irradiation with UV light, a step of washing is performed, wherein the gas flow obtained after the step of irradiation with UV light is passed through a scrubber.

5. A method according to one or more of the preceding claims, wherein before bringing the pressurized gas stream, which comprises nitrogen components, into contact with the adsorbent, said gas stream is dehydrated.

6. A method according to claim 5, wherein moisture extracted from the pressurized gas stream is fed into the gas stream rich in nitrogen components before the step of irradiation with UV light takes place.

7. A method according to one or more of the preceding claims, wherein the gas stream rich in nitrogen components is stored in a storage unit before the conversion of the nitrogen components into nitrate is carried out.

8. A method according to one or more of the preceding claims, wherein the steps of adsorbing nitrogen components by adsorbent and desorbing nitrogen components from adsorbent are performed alternately such that nitrogen components are continuously removed from a gas stream comprising nitrogen components.

9. A method according to one or more of the preceding claims, wherein the gas flow, which comprises nitrogen components, originates from exhaust gases of an internal combustion engine, in particular that the said exhaust gases are subjected directly to the step of pressurizing the gas flow.

10. A method according to one or more of the preceding claims, wherein the step of pressurizing the gas stream comprising nitrogen components is carried out at a pressure of at least 6 bar (0,6 Mpa), in particular wherein the step of reducing the pressure of the adsorbent to obtain a gas stream rich in nitrogen components is carried out at a pressure not exceeding 6 bar, in particular in a range of 6 bar to 3,5 bar (0,6 MPa-0,35 Mpa).

11. A device for the removal of nitrogen components from a gas stream, comprising a device for the supply of a gas stream comprising nitrogen components, a device comprising an adsorbent for forming a gas stream depleted of nitrogen components, means for obtaining a gas stream rich in nitrogen components and means for converting nitrogen components into nitrate.

12. A device according to claim 11, wherein said device further comprises one or more compressors for pressurizing the gas stream comprising nitrogen components and wherein the device also comprises means for the release of pressure.

13. A device according to one or more of claims 11-12, wherein said means of converting nitrogen components into nitrate are selected from the group of a UV light source and a scrubber, or a combination thereof, wherein in particular said UV light source is equipped with a catalyst material, in particular TiO₂.

14. A device according to one or more of claims 11-13, wherein said device also comprises means for the extraction of moisture from the gas stream to be treated, said gas stream comprises nitrogen components, and means for supplying extracted moisture to the gas stream rich in nitrogen components.

15. A device according to one or more of claims 11-14, wherein said device also comprises a storage unit for the gas stream rich in nitrogen components.
